(19) **Europäisches Patentamt / European Patent Office / Office européen des brevets**

(11) **EP 4 614 975 A1**

(12) **EUROPEAN PATENT APPLICATION**
published in accordance with Art. 153(4) EPC

(43) Date of publication:
10.09.2025 Bulletin 2025/37

(21) Application number: 23884559.8

(22) Date of filing: 11.10.2023

(51) International Patent Classification (IPC):
$H04N\ 19/20^{(2014.01)}$

(52) Cooperative Patent Classification (CPC):
H04N 19/60; H04N 19/137; H04N 19/172;
H04N 19/182; H04N 19/196; H04N 19/42;
H04N 19/54; H04N 19/91

(86) International application number:
PCT/CN2023/123893

(87) International publication number:
WO 2024/093627 (10.05.2024 Gazette 2024/19)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 04.11.2022 CN 202211377480

(71) Applicant: Tencent Technology (Shenzhen)
Company Limited
Shenzhen, Guangdong 518057 (CN)

(72) Inventors:
• LUO, Feng
Shenzhen, Guangdong 518057 (CN)
• XIANG, Jinxi
Shenzhen, Guangdong 518057 (CN)
• TIAN, Kuan
Shenzhen, Guangdong 518057 (CN)
• ZHANG, Jun
Shenzhen, Guangdong 518057 (CN)

(74) Representative: EP&C
P.O. Box 3241
2280 GE Rijswijk (NL)

(54) **VIDEO COMPRESSION METHOD, VIDEO DECODING METHOD, AND RELATED APPARATUSES**

(57) Disclosed in the present application are a video compression method, a video decoding method, and related apparatuses. The video compression method comprises: respectively performing key point extraction on a video frame to be processed and the previous video frame, so as to obtain first position information and second position information; performing motion estimation according to the first position information and the second position information, so as to obtain motion information; performing image inpainting according to the motion information and the previous video frame, so as to obtain an initial video frame; determining a hidden feature according to the video frame to be processed and the initial video frame; and performing video compression according to the first position information, the second position information and the hidden feature, so as to obtain a video compression file. Therefore, a byte stream consumed by motion information is reduced, and the transmission bandwidth is decreased. Since a video compression file comprises a hidden feature, after an initial video frame is obtained on the basis of first position information and second position information, a video receiving end performs secondary inpainting on the initial video frame by using the hidden feature, such that the distortion phenomenon of a reconstructed video frame caused by complicated picture motion is alleviated, thereby improving the robustness of an algorithm.

EP 4 614 975 A1

FIG. 1

**Description**

RELATED APPLICATION

This application claims priority to Chinese Patent Application No. 202211377480.4, filed with the China National Intellectual Property Administration on November 4, 2022 and entitled "VIDEO COMPRESSION METHOD, VIDEO DECODING METHOD, AND RELATED APPARATUSES".

FIELD OF THE TECHNOLOGY

This application relates to the field of communication technologies, and in particular, to a video compression technology and a video decoding technology.

BACKGROUND OF THE DISCLOSURE

The rapid development of computer technologies, network technologies, communication technologies, and streaming media technologies, provides a strong technical support for the development of multimedia video communication. Video communication is widely used in scenarios such as video conferencing, online education, and online entertainment. However, how to reduce video freeze, lower a bandwidth requirement for video communication, and ensure video communication experience of a user is a problem that needs to be urgently solved.

Video compression is a key technology to solve the problem. Video frames are compressed, so that a video can be transmitted with a low byte stream, and a high-quality video can be restored as much as possible based on a compressed video file with a low byte stream. Currently, a main operation is to calculate motion information of a to-be-processed video frame compared with a previous video frame, and then send the motion information to restore the to-be-processed video frame based on the previous video frame and the motion information.

However, in the method, the motion information consumes a large byte stream, and it is difficult to estimate motion information in a case that there is complex picture motion in a video frame, and a reconstructed picture is prone to distortion.

SUMMARY

To solve the foregoing technical problems, this application provides a video compression method, a video decoding method, and related apparatuses, to alleviate distortion of a video frame caused by complex picture motion and improve algorithm robustness. In addition, a compressed video file includes first position information and second position information instead of a dense feature vector representing motion information, so that in a case that video compression is implemented, a byte stream consumed by the motion information is greatly reduced and a transmission bandwidth of the compressed video file is reduced.

Embodiments of this application disclose the following technical solutions.

According to an aspect, an embodiment of this application provides a video compression method. The method includes:

obtaining motion information of a first video frame relative to a previous video frame of the first video frame, based on first position information of a first key point in the first video frame and second position information of a second key point in the previous video frame;

determining a latent feature based on the first video frame and an initial video frame generated based on the motion information and the previous video frame, the latent feature representing an inpainting deviation of the initial video frame relative to the first video frame; and

performing video compression based on the first position information, the second position information, and the latent feature.

According to an aspect, an embodiment of this application provides a video decoding method. The method includes:

obtaining motion information of a first video frame relative to a previous video frame of the first video frame based on first position information of a first key point in the first video frame and second position information of a second key point in the previous video frame in a compressed video file; and

obtaining a final video frame by using a latent feature in the compressed video file and an initial video frame generated based on the motion information and the previous video frame.

According to an aspect, an embodiment of this application provides a video compression apparatus. The apparatus includes an obtaining unit, a determining unit, and a compression unit.

The obtaining unit is configured to obtain motion information of a first video frame relative to a previous video frame of the first video frame, based on first position information of a first key point in the first video frame and second position information of a second key point in the previous video frame.

The determining unit is configured to determine a latent feature based on the first video frame and an initial video frame generated based on the motion information and the previous video frame, the latent feature representing an inpainting deviation of the initial video frame relative to the first video frame.

The compression unit is configured to perform video compression based on the first position information, the second position information, and the latent feature.

According to an aspect, an embodiment of this application provides a video decoding apparatus. The apparatus includes an obtaining unit, and a decoding unit.

The obtaining unit is configured to obtain motion information of a first video frame relative to a previous video frame of the first video frame based on first position information of a first key point in the first video frame and second position information of a second key point in the previous video frame in a compressed video file.

The decoding unit is configured to obtain a final video frame by using a latent feature in the compressed video file and an initial video frame generated based on the motion information and the previous video frame.

According an aspect, an embodiment of this application provides a computer device. The computer device includes a processor and a memory.

The memory is configured to store program code and transmit the program code to the processor.

The processor is configured to perform the method according to any one of the foregoing aspects based on instructions in the program code.

According to an aspect, an embodiment of this application provides a computer-readable storage medium, configured to store program code, the program code, when executed by a processor, enabling the processor to perform the method according to any one of the foregoing aspects.

According to an aspect, an embodiment of this application provides a computer program product, including a computer program, the computer program, when executed by a processor, implementing the method according to any one of the foregoing aspects.

It can be learned from the foregoing technical solution that when video compression is required for the first video frame, the motion information of the first video frame relative to the previous video frame is obtained based on first position information of a first key point in the first video frame and second position information of a second key point in the previous video frame. To avoid distortion of a reconstructed picture when complex pictures such as motion of a plurality of objects and an object that does not appear in the previous video frame are included in the first video frame, in this application, the latent feature may be further determined based on the first video frame and the initial video frame generated based on the motion information and the previous video frame during the video compression, and the inpainting deviation of the initial video frame relative to the first video frame is represented by using the latent feature, so that the compressed video file is obtained by performing the video compression based on the first position information, the second position information, and the latent feature. In this way, after obtaining the compressed video file, a video receiving end may obtain the motion information based on the first position information and the second position information. Because the compressed video file further includes the latent feature, and the latent feature represents the inpainting deviation of the initial video frame relative to the first video frame, the video receiving end may further use the latent feature to perform inpainting on the initial video frame generated based on the motion information and the previous video frame, to alleviate distortion of a video frame caused by complex picture motion and improve algorithm robustness. In addition, the compressed video file includes the first position information and the second position information instead of a dense feature vector representing the motion information, so that in a case that the video compression is implemented, a byte stream consumed by the motion information is greatly reduced, and a transmission bandwidth of the compressed video file is reduced.

BRIEF DESCRIPTION OF THE DRAWINGS

To describe the technical solutions in embodiments of this application or in conventional technologies more clearly, the following briefly describes the accompanying drawings required for describing embodiments or conventional technologies. Apparently, the accompanying drawings in the following description show only some embodiments of this application, and a person of ordinary skill in the art may still derive other drawings from these accompanying drawings without creative efforts.

FIG. 1 is an architectural diagram of an application scenario of a video compression method according to an embodiment of this application.

FIG. 2 is a flowchart of a video compression method according to an embodiment of this application.

FIG. 3 is an exemplary diagram of a structure of a video compression model according to an embodiment of this application.

FIG. 4 is an exemplary diagram of a specific process of probabilistic modeling according to an embodiment of this application.

FIG. 5 is a flowchart of a video decoding method according to an embodiment of this application.

FIG. 6 is an exemplary diagram of a specific process of AI video compression according to an embodiment of this application.

FIG. 7 is a performance comparison diagram of a plurality of solutions in terms of subjective quality of an image according to an embodiment of this application.

FIG. 8 is a performance comparison diagram of a plurality of solutions in terms of complex scenario reconstruction according to an embodiment of this application.

FIG. 9 is a performance comparison diagram of a plurality of solutions in a non-face scenario according to an embodiment of this application.

FIG. 10 is a diagram of a structure of a video compression apparatus according to an embodiment of this application.

FIG. 11 is a diagram of a structure of a video decoding apparatus according to an embodiment of this application.

FIG. 12 is a diagram of a structure of a terminal according to an embodiment of this application.

FIG. 13 is a diagram of structure of a server according to an embodiment of this application.

DESCRIPTION OF EMBODIMENTS

The following describes embodiments of this application with reference to the accompanying drawings.

The rapid development of computer technologies, network technologies, communication technologies, and streaming media technologies, provides a strong technical support for the development of multimedia video communication. Video communication is widely used in scenarios such as video conferencing, online education, and online entertainment. Especially in the past two years, due to the spread of the virus, a way companies and organizations operate undergoes major changes. A form of service communication between people gradually transferred from offline to online, making the video communication more widely used in the video conferencing. Compared with offline conferencing, online video conferencing reduces a spatial location restriction of participants and promotes efficient and cost-effective collaboration. However, how to reduce video freeze, lower a bandwidth requirement for the video conferencing, and ensure video conferencing experience of a user is an urgent problem that needs to be solved. Video compression is a key technology to solve the problem. Video frames are compressed, so that a video can be transmitted with a low byte stream, and a high-quality video can be restored based on a file with a low byte stream as much as possible. The video compression is classified into lossy video compression and lossless video compression based on a quality difference between a decompressed video and an original video. This application focuses on the lossy video compression.

When the video compression is performed, given a video, the starting video frame in a video frame sequence is denoted as an I frame, and remaining video frames are denoted as P frames. Because there is often repeated and redundant information between different video frames of the same video, during the video compression, a current video frame is restored based on a previous video frame $x_{t-1}$ of the current video frame (namely, a to-be-processed video frame) $x_t$. In a case that $x_{t-1}$ is known, it is only needed to determine a difference between the current video frame $x_t$ and the previous video frame $x_{t-1}$ to reconstruct the current video frame.

The difference between the current video frame $x_t$ and the previous video frame $x_{t-1}$ may be reflected by motion information, so that in related art, motion information of the current video frame compared with the previous video frame may be usually obtained, and then the motion information is sent to restore, based on the previous video frame and the motion information, the current video frame. However, in the method, the motion information is a dense motion feature vector and consumes a large byte stream, and it is difficult to estimate the motion information in a case that there is complex picture motion in a video frame, and a reconstructed picture is prone to distortion.

To solve the foregoing technical problems, the embodiments of this application provide a video compression method. In the method, a compressed video file is obtained by performing video compression based on first position information of a first key point of the first video frame, second position information of a second key point of the previous video frame, and a latent feature. In this way, after obtaining the compressed video file, a video receiving end may obtain the motion information based on the first position information and the second position information. Because the compressed video file further includes the latent feature, and the latent feature represents an inpainting deviation of the initial video frame relative to the first video frame, the video receiving end may further use the latent feature to obtain a final video frame based on an initial video frame generated from the motion information and a previous video frame. to alleviate distortion of a video frame caused by complex picture motion and improve algorithm robustness. In addition, the compressed video file includes the first position information and the second position information instead of a dense feature vector representing the motion information, so that in a case that the video compression is implemented, a byte stream consumed by the motion information is greatly reduced, and a transmission bandwidth of the compressed video file is reduced.

The video compression method provided in embodiments of this application is applicable to various video communication scenarios, such as video conferencing, online education, and online entertainment.

The video compression method provided in embodiments of this application may be performed by a computer device. The computer device may be used as a video transmitting end. The computer device may be, for example, a server or a terminal. The server may be an independent physical server, a server cluster or a distributed system including a plurality of physical servers, or a cloud server that provides a cloud computing service. The terminal includes but is not limited to a smartphone, a computer, an intelligent voice interaction device, a smart home appliance, an on-board terminal, an aerial vehicle, and the like. It is further noted that the technical features in the following embodiments in this application can implements in their respective embodiments, or implemented in combination with features in any other embodiments. That is, the embodiments in the application can be implemented alone, or in combination with any one or more of the other embodiments in the application, to achieve different technical solutions and technical effects

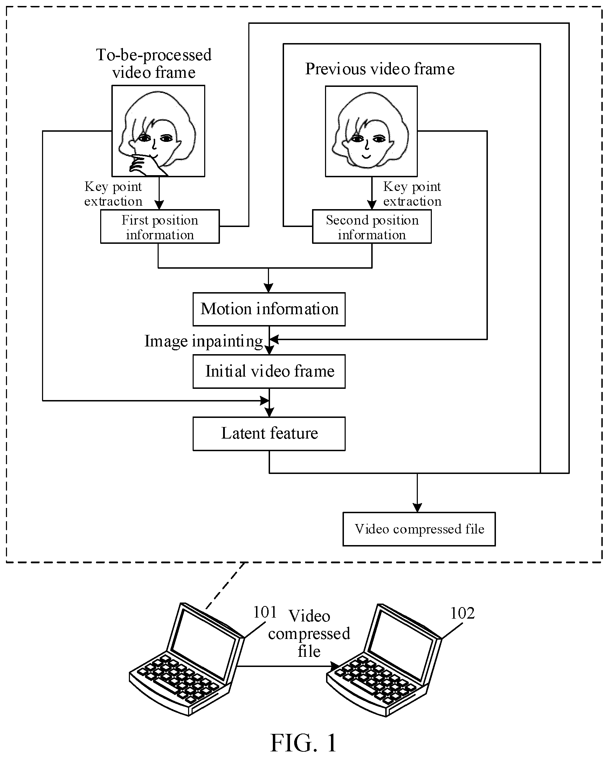

FIG. 1 is an architectural diagram of an application scenario of a video compression method. The application scenario may include a video transmitting end 101 and a video receiving end 102. When video communication is performed between the video transmitting end 101 and the video receiving end 102, the video transmitting end 101 needs to transmit video frames to the video receiving end 102, and all transmitted video frames may constitute a video frame sequence transmitted in the video communication. When the video frames are sent, to reduce a byte stream consumed by transmitting the video frames, video compression is usually performed on video frames that need to be sent.

In the method according to the embodiments of the present disclosure, motion information of a first video frame relative to a previous video frame of the first video frame, based on first information of a first key point in the first video frame and second position information of a second key point in the previous video frame. Based on the first video frame and an initial video frame generated based on the motion information and the previous video frame, a latent feature representing an inpainting deviation of the initial video frame relative to the first video frame is determined. Finally, video compression is performed based on the first position information, the second position information and the latent feature; for example, a compressed video file may be generated by the video compression. The above process may be performed by the video transmitting end 101. How to obtain the first position information and the second information and how to obtain the initial video frame are described in some follow-up embodiments of the present disclosure.

Accordingly, at the video receiving end 102, motion information of a first video frame relative to a previous video frame of the first video frame is obtained based on first position information of a first key point in the first video frame and second position information of a second key point in the previous video frame in a compressed video file. A final video frame is finally obtained by using a latent feature in the compressed video frame and an initial video frame generated based on the motion information and the previous video frame. How to generate the initial video frame and obtain the final video frame are detailed in some follow-up embodiments of the present disclosure.

In some embodiments of the present application, when a current video frame is to be transmitted, the current video frame may be the first video frame, and can alternatively be termed as "to-be-processed video frame", which is recited in the following of the description to be more descriptive, and the video compression is performed on the to-be-processed video frame. In some embodiments, the video transmitting end 101 may obtain the to-be-processed video frame and a previous video frame of the to-be-processed video frame. The to-be-processed video frame is a video frame on which the video compression needs to be performed and that needs to be transmitted to the video receiving end 102, and the previous video frame is a video frame adjacent to the to-be-processed video frame and before the to-be-processed video frame in the video frame sequence.

Then, the video transmitting end 101 may extract a key point from the to-be-processed video frame to obtain first position information of a first key point of the to-be-processed video frame, and extract a key point from the previous video frame to obtain second position information of a second key point of the previous video frame, to perform motion estimation based on the first position information and the second position information, to obtain motion information of the to-be-processed video frame relative to the previous video frame. The key point may be a representative point on an object included in a video frame. The key point represents the object included in the video frame. The object may be a human, an animal, or the like. In an example in which the object is a human, key points may be representative points on body parts of a human body included in the video frame, and the body parts may include, for example, a face, a hand, an arm, a body, a foot, and a leg. For example, when the body part included in the video frame is a face, the key points may be representative points on the face. When the body parts included in the video frame are a face and a hand, the key points may be representative points on the face and the hand, and the like. The key point of the to-be-processed video frame may be referred to as the first key point, which may be a representative point on a first object included in the to-be-processed video frame. The key point of the previous video frame may be referred to as the second key point, which may be a representative point on a second object included in the previous video frame. The first object and the second object may be the same or different.

The video transmitting end 101 performs image inpainting based on the motion information and the previous video frame to obtain an initial video frame. To avoid distortion of a reconstructed picture when complex pictures such as motion of a plurality of objects and an object that does not appear in the previous video frame are included in the to-be-processed video frame, in this application, the video transmitting end 101 may further determine a latent feature based on the to-be-processed video frame and the initial video frame during the video compression. The latent feature may be a feature of an unclear part of the initial video frame after the image inpainting relative to the to-be-processed video frame. The latent feature is configured for representing an inpainting deviation of the initial video frame relative to the to-be-processed video frame.

Then, the video transmitting end 101 may perform video compression based on the first position information, the second position information, and the latent feature to obtain a compressed video file, and send the compressed video file to the video receiving end 102. After receiving the compressed video file, the video receiving end 102 may obtain the motion information by calculating the first position information and the second position information, and perform image inpainting based on the motion information and the previous video frame to obtain the initial video frame. Because the compressed video file further includes the latent feature, and the latent feature represents the inpainting deviation of the initial video frame relative to the to-be-processed video frame, the video receiving end 102 may further use the latent feature to perform further inpainting on the initial video frame to alleviate distortion of a video frame caused by complex picture motion and improve algorithm robustness. In addition, the compressed video file includes the first position information and the second position information instead of a dense feature vector representing the motion information, so that in a case that the video compression is implemented, a byte stream consumed by the motion information is greatly reduced, and a transmission bandwidth of the compressed video file is reduced.

The method provided in this embodiment of this application mainly relates to an artificial intelligence technology, and video compression and video decoding are automatically performed by using the artificial intelligence (AI) technology. In this embodiment of this application, a video compression model may be trained through machine learning, the to-be-processed video frame and the previous video frame may be further preprocessed through image processing in a computer vision technology, and the key points, the latent feature, and the like are extracted through image semantic understanding.

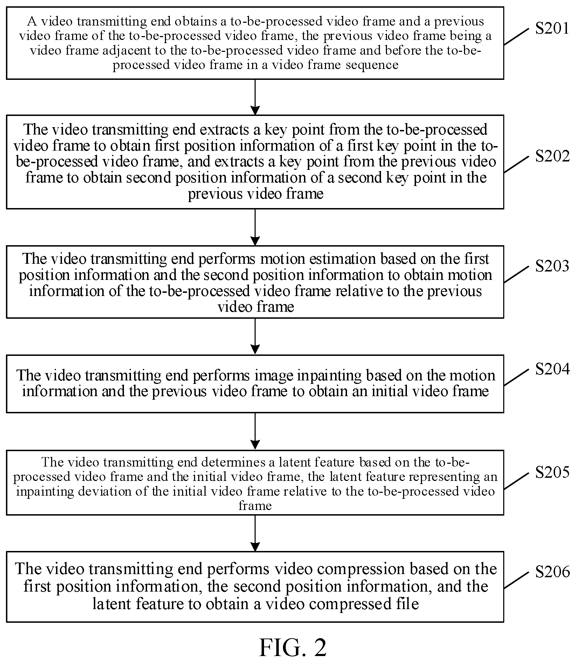

The video compression method in some further embodiments of this application is described in detail below with reference to the accompanying drawings. FIG. 2 is a flowchart of a video compression method.

The method may include S201 in which a video transmitting end obtains a to-be-processed video frame and a previous video frame of the to-be-processed video frame, the previous video frame being a video frame adjacent to the to-be-processed video frame and before the to-be-processed video frame in a video frame sequence.

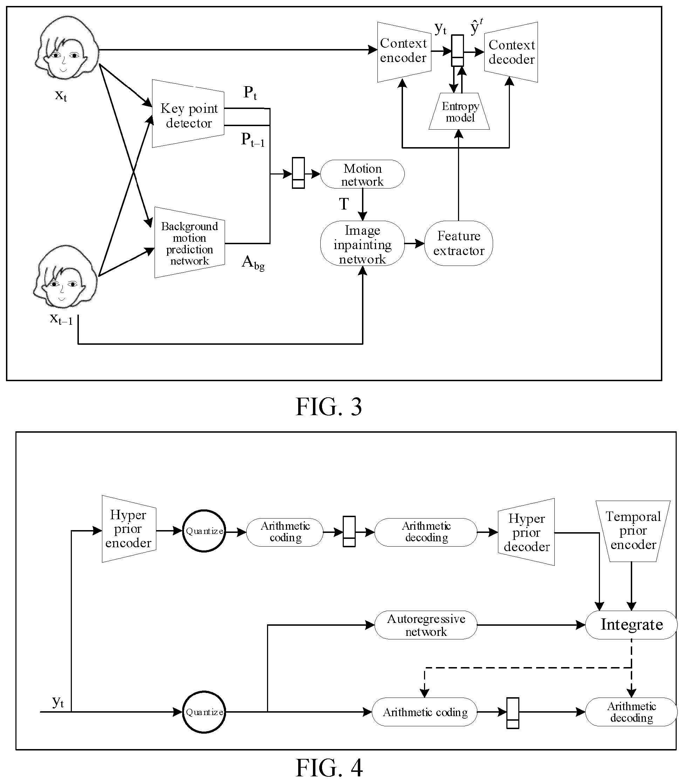

When the video transmitting end needs to send a current video frame to a video receiving end, the current video frame may be used as the to-be-processed video frame for video compression. Based on a principle of the video compression, the previous video frame is usually used as a reference to reconstruct the to-be-processed video frame based on a difference between the to-be-processed video frame and the previous video frame. Therefore, the video transmitting end may obtain the to-be-processed video frame and the previous video frame of the to-be-processed video frame. The to-be-processed video frame is a video frame on which video compression needs to be performed and that needs to be transmitted to the video receiving end, and the previous video frame is a video frame adjacent to the to-be-processed video frame and before the to-be-processed video frame in the video frame sequence. The to-be-processed video frame may be represented by xt, and the previous video frame may be represented by $x_{t-1}$. FIG. 3 is an exemplary diagram of a structure of a video compression model. For the to-be-processed video frame $x_t$ and the previous video frame $x_{t-1}$, reference may be made to FIG. 3.

In a possible implementation, the video frame sequence is obtained by sorting, based on a time order of a plurality of video frames in time domain, the plurality of video frames that need to be transmitted. Correspondingly, the previous video frame is a video frame adjacent to the to-be-processed video frame in the video frame sequence and a video frame before the to-be-processed video frame in time domain.

In embodiments, the method may further include S202 in which the video transmitting end extracts a key point from the to-be-processed video frame to obtain first position information of a first key point in the to-be-processed video frame, and extracts a key point from the previous video frame to obtain second position information of a second key point in the previous video frame.

After obtaining the to-be-processed video frame and the previous video frame, the video transmitting end may determine a difference between the to-be-processed video frame and the previous video frame. The difference between the to-be-processed video frame and the previous video frame may be represented by motion information. In some cases, a byte stream may be reduced to reduce motion information consumption. For example, in a special scenario such as video conferencing, an object in a picture is generally a low-complexity instance such as a human face or a human body. When motion information of the object is measured, motion information between video frames may be measured by using special points in the instance, such as a key point. Because motion information in video compression is commonly stored in a dense feature vector with a size of (N, 2, H/16, W/16), a byte stream consumed by the motion information can be greatly reduced by recording position information of the key point. N represents a quantity of key points used to determine the motion information, H represents a height of a to-be-processed video frame, and W represents a width of the to-be-processed video frame.

Based on this, to reduce the consumed byte stream, in this embodiment of this application, the video transmitting end may extract the key points of the to-be-processed video frame and the previous video frame respectively, recognize the first key point of the to-be-processed video frame and the second key point of the previous video frame, to obtain the first position information of the first key point and the second position information of the second key point, and transmit a video frame by using the first position information and the second position information instead of a dense feature vector representing the motion information to the video receiving end. In a possible case, the position information may be represented by coordinates. To be specific, the first position information may be coordinates of the first key point, and the second position information may be coordinates of the second key point.

In a possible implementation, the key points may be facial landmarks. The facial landmarks are a set of fixed points pre-defined based on a structure of human facial features. However, in some scenarios, such as a human body motion scenario, an object included in a video frame may include not only a face, but also a hand, an arm, a foot, and the like. In this case, to make the extracted key points applicable to various scenarios and improve an effect of subsequent reconstruction, the key points may be key points of parts of the object in the video frame. In some embodiments, the first key points may include key points of body parts included in a first object in the to-be-processed video frame, and the second key points may include key points of body parts included in a second object in the previous video frame.

For example, the first object and the second object are the same object, a face and a hand of the first object are displayed in the to-be-processed video frame, then the first key points may be key points of the face and key points of the hand. Similarly, a face of the second object is displayed in the previous video frame, then the second key points may be key points of the face.

The foregoing key points are extracted, so that in the method, compared with a facial landmark-based video compression algorithm provided in related art, the extracted key points are applicable to various scenarios, thereby making the video compression method more scalable and improving an effect of subsequent reconstruction.

In this embodiment of this application, a plurality of manners are provided for respectively extracting key points from the to-be-processed video frame and the previous video frame to obtain corresponding key points. In a possible implementation, a manner of extracting the key point from the to-be-processed video frame to obtain the first position information of the first key point in the to-be-processed video frame and extracting the key point from the previous video frame to obtain the second position information of the second key point in the previous video frame may be to recognize a body part included in the first object in the to-be-processed video frame, and to recognize a body part included in the second object in the previous video frame, then to determine, based on a mapping relationship between a body part and a key point, a key point corresponding to the body part included in the first object, determine the first position information of the key point corresponding to the body part included in the first object in the to-be-processed video frame, determine, based on the mapping relationship between the body part and the key point, a key point corresponding to the body part included in the second object, and to determine second position information of the key point corresponding to the body part included in the second object in the previous video frame. The mapping relationship between the body part and the key point may be predetermined. The key points of the body part may be, for example, a set of fixed points predefined based on a structure of the body part. A manner of defining the key point of the body part is not limited in this embodiment of this application.

In another possible implementation, a manner of extracting the key point from the to-be-processed video frame to obtain the first position information of the first key point in the to-be-processed video frame and extracting the key point from the previous video frame to obtain the second position information of the second key point in the previous video frame may be to extract the key point from the to-be-processed video frame by using a key point detection model on the video transmitting end to obtain the first position information and to extract the key point from the previous video frame by using the key point detection model to obtain the second position information. The key point detection model is obtained through training a training sample. The training sample includes a plurality of sample images. A sample object in each sample image includes a body part, and body parts included in sample objects in the plurality of sample images include various body parts. In other words, to extract accurate key points in different scenarios, the key point detection model may be trained in a manner of adaptive learning, to learn key points extracted from video frames in different scenarios. During training, with continuous iterations, the key point detection model may gradually gain a capability to predict key points of the video frames in different scenarios.

The key point detection model is trained in the manner of adaptive learning, so that the key point detection model has an adaptive capability, and the method provided in this embodiment of this application is applicable to various scenarios, including scenarios other than a human face, thereby improving key points extraction capability.

A network structure of the key point detection model is not limited in this embodiment of this application. The key point detection model may be, for example, a key point detection network or key point detector. In this embodiment of this application, an example in which the key point detection model is the key point detector is used for description. The key point detector may be, for example, a deep residual network (ResNet), to be specific, ResNet18. The key point detector works as follows: Image I is used as input, after an image feature is extracted by ResNet18, a single fully-connected layer is used to regress position information of KxN key points of image I. K may represent a quantity of groups of key points, N may represent a quantity of key points in each group, and K and N may be preset, for example, K = 10, N = 5. Based on the foregoing principle, in this embodiment of this application, the to-be-processed video frame $x_t$ or the previous video frame $x_{t-1}$ may be used as image I, $x_t$ and $x_{t-1}$ are respectively inputted into the key point detector to predict corresponding key points, which are the first key points and the second key points. The first key points may be represented as $P_i^t$, and the second key points may be represented as $P_i^{t-1}$ (i = 1,2 ..., KN). Reference may be made to FIG. 3. Generally, the predicted key points may be represented by position information, for example, the first position information for the first key points and the second position information for the second key points.

In embodiments, the method further include S203 in which The video transmitting end performs motion estimation based on the first position information and the second position information to obtain motion information of the to-be-processed video frame relative to the previous video frame.

After the first position information and the second position information are obtained, the first position information and the second position information may be used to represent the motion information for encoding and decoding of the to-be-processed video frame. However, to alleviate distortion of a reconstructed picture caused by complex picture motion, the video transmitting end may perform the motion estimation based on the first position information and the second position information to obtain the motion information of the to-be-processed video frame relative to the previous video frame, to preliminarily predict an initial video frame restored after video compression based on the first position information and the second position information, and then determine distortion of the initial video frame, to alleviate possible distortion during the video compression. The to-be-processed video frame may move relative to the previous video frame. Therefore, the motion information obtained is also relative motion information.

In a possible implementation, a manner of performing the motion estimation based on the first position information and the second position information to obtain the motion information of the to-be-processed video frame relative to the previous video frame may be that the video transmitting end performs thin plate spline transformation (TPS transformation) based on the first position information and the second position information to obtain a thin plate spline transformation matrix, then transforms the previous video frame based on the thin plate spline transformation matrix to obtain a transformed image, and outputs a contribution graph over a motion network based on the transformed image. The contribution graph is configured for representing a contribution of the thin plate spline transformation matrix to motion of each pixel on the previous video frame. In this way, the motion information may be calculated based on the contribution graph and the thin plate spline transformation matrix.

First key points of the obtained to-be-processed image and the second key points of the previous video frame may be divided into K groups, and each group of key points may include a first key point and a second key point. For K groups of key points ( $P_k^t$, $P_k^{t-1}$ ) (k = 1,2,.., K), during thin plate spline transformation, the thin plate spline transformation may be performed on each group to obtain K thin plate spline transformation matrices. The thin plate spline transformation matrix may be represented by $T_k$, and $T_k \in \mathcal{R}^{H \times W}$ and $T_k \in \mathcal{R}^{H \times W}$ indicate that a size of each thin plate spline transformation matrix is HxW, H is a height of the to-be-processed image, and W is a width of the to-be-processed image.

When the contribution graph is calculated, and when the previous video frame is transformed based on the obtained thin plate spline transformation matrix to obtain the transformed image, a size of the obtained transformed image may be (K + 1, 3, H, W). In this case, K+1 contribution graphs may be obtained based on the transformed image. The contribution graph may be represented by $M_k$, and $M_k \in \mathcal{R}^{H \times W}$ (k = 1,2,.., K + 1) and $M_k \in \mathcal{R}^{H \times W}$ indicate that a size of each contribution graph is HxW.

When calculating the motion information based on the contribution graph and the thin plate spline transformation matrix, the contribution graph may be used as a weight to linearly weight different thin plate spline transformation matrices at the same position to obtain the motion information. In this case, the motion information may be an optical flow field. A calculation formula for calculating the motion information based on the contribution graph and the thin plate spline transformation matrix may be as follows:

$$T(x, y) = \sum_{k=1}^{K+1} M_k(x, y) T_k(x, y)$$

T(x, y) represents the motion information (for example, the optical flow field), $M_k(x, y)$ represents a kth contribution graph, $T_k(x, y)$ represents a $k^{th}$ thin plate spline transformation matrix, K represents the quantity of groups of key points (namely, a quantity of groups of thin plate spline transformation), and (x, y) represents coordinates of each pixel.

The foregoing process may be implemented over a motion network on the video transmitting end. The motion network may be configured for predicting the motion information (reference may be made to FIG. 3) for subsequent image inpainting. A network structure of the motion network is not limited in this embodiment of this application.

In some cases, the to-be-processed video frame may include a background area in addition to the first object. In this case, the first object is a foreground and may block the background area to a specific extent. To avoid excessively dispersing a focus of image inpainting in the background area, which affects reconstruction of the more important first object (the foreground), in addition to outputting the contribution graph over the motion network based on the transformed image, mask information may also be outputted over the motion network based on the transformed image. The mask information is configured for indicating that the focus of the image inpainting is to be put more on the foreground (that is, the first object), to reduce an impact of the background area on foreground image inpainting, and improve an image inpainting effect.

In some cases, to avoid a problem that a predicted key point appears in the background area due to motion of a camera collecting a video, which results in a deviation in the motion estimation, in this embodiment of this application, an affine transformation matrix of the background may be predicted additionally for background motion modeling. In some embodiments, the to-be-processed video frame and the previous video frame may be spliced, and a second splicing result obtained through the splicing is inputted into a background motion prediction network to obtain the affine transformation matrix. The affine transformation matrix is configured for representing background motion of the to-be-processed video frame relative to the previous video frame.

The prediction of the foregoing affine transformation matrix may be implemented over the background motion prediction network (BG Motion Predictor) on the video transmitting end. The to-be-processed video frame $x_{t-1}$ and the previous video frame $x_t$ are spliced in a channel direction and the second splicing result is inputted into the background motion prediction network. An image feature of the second splicing result is extracted over the background motion prediction network, and then a single fully-connected layer is used to regress a two-dimensional affine transformation matrix (reference may be made to FIG. 3). A network structure of the background motion prediction network is not limited in this embodiment of this application, for example, may be another ResNet18, and the affine transformation matrix may be represented as $A_{bg}$ and $A_{bg} \in \mathcal{R}^{2 \times 3}$. $A_{bg} \in \mathcal{R}^{2 \times 3}$ indicates that a size of the affine transformation matrix is 2x3.

In this case, a manner of transforming the previous video frame based on the thin plate spline transformation matrix to obtain the transformed image may be to transform the previous video frame by using the thin plate spline transformation matrix and the affine transformation matrix to obtain the transformed image. When using the affine transformation matrix, because it is needed to use both the affine transformation matrix and the thin plate spline transformation matrix to transform the previous video frame, to facilitate a calculation between the affine transformation matrix and the thin plate spline transformation matrix, the affine transformation matrix may be transformed into a two-dimensional vector with the same size as the thin plate spline transformation matrix $T_k$ by using the following formula:

$$T_{bg}(p) = A_{bg} \begin{bmatrix} p \\ 1 \end{bmatrix}.$$

$p = (x, y)^T$ ($x \in \{0, 1, .. H - 1\}$ and $y \in \{0, 1, .. W - 1\}$) represents coordinates of each pixel, H represents a height of the previous video frame, and W represents a width of the previous video frame.

The previous video frame $x_{t-1}$ is transformed by using K thin plate spline transformation matrices and the affine transformation matrix respectively, where $x_{t-1} \in \mathcal{R}^{3 \times H \times W}$. $x_{t-1} \in \mathcal{R}^{3 \times H \times W}$ represents that a size of the previous video frame is 3xHxW, so that a transformed image with a size of (K + 1, 3, H, W) is obtained.

The transformed image is obtained by calculating the affine transformation matrix and using the affine transformation matrix, so that possible background motion is taken into consideration when the transformed image is determined, to improve accuracy of subsequent motion estimation.

In embodiments, the method may further include S204 in which the video transmitting end performs image inpainting based on the motion information and the previous video frame to obtain an initial video frame.

The video transmitting end may perform the image inpainting based on the motion information and the previous video frame to obtain the initial video frame, to determine possible distortion when the to-be-processed video frame is directly reconstructed by using the motion information, to alleviate the distortion. A manner of the image inpainting may be, for example, image warping (for example, warp) processing.

The motion information may reflect a difference between the to-be-processed video frame and the previous video frame, so that the initial video frame may be obtained by performing transformation on the basis of the previous video frame based on the motion information.

S204 may be implemented over an image inpainting network (inpainting network) on the video transmitting end, to be specific, the motion information and the previous video frame may be inputted into the image inpainting network to output the initial video frame. A network structure of the image inpainting network is not limited in this embodiment of this application. For example, the image inpainting network may use an encoder-decoder structure. The image inpainting network uses the previous video frame $x_{t-1}$ and the motion information (for example, the optical flow field T(x,y)) as input, and outputs the transformed initial video frame (reference may be made to FIG. 3). The initial video frame may be represented by $x_t^{warped}$. When the image inpainting network uses the encoder-decoder network structure, four downsamplings and four upsamplings may be performed on $x_{t-1}$ in sequence over the image inpainting network. At an upsampling stage, the optical flow field T is used to transform feature maps at all levels, and finally the initial video frame $x_t^{warped}$ is outputted.

When there is a case in which the foreground blocks the background area in the to-be-processed image, the foregoing motion network may output the mask information. In this case, a manner of performing the image inpainting based on the motion information and the previous video frame to obtain the initial video frame may be to perform the image inpainting based on the motion information, the mask information, and the previous video frame to obtain the initial video frame. The mask information is configured for indicating that the focus of the image inpainting is to be put more on the foreground (that is, the first object). In other words, the background area is ignored under the indication of the mask information, and then the initial video frame is obtained by performing transformation on the basis of the previous video frame based on the motion information, to reduce an impact of the background area on foreground image inpainting, to improve an image inpainting effect.

When the image inpainting is performed based on the motion information, the mask information, and the previous video frame to obtain the initial video frame, the foregoing image inpainting network may also be used. An implementation process is similar to that described in FIG. 3, which is not described herein again.

In embodiments, the method may further include S205 in which the video transmitting end determines a latent feature based on the to-be-processed video frame and the initial video frame, the latent feature representing an inpainting deviation of the initial video frame relative to the to-be-processed video frame.

After obtaining the initial video frame, to avoid distortion of a reconstructed picture when complex pictures such as motion of a plurality of objects and an object that does not appear in the previous video frame are included in the to-be-processed video frame, in this embodiment of this application, the video transmitting end may further determine the latent feature based on the to-be-processed video frame and the initial video frame during the video compression. The latent feature may be a feature of an unclear part of the initial video frame after the image inpainting relative to the to-be-processed video frame. The latent feature is configured for representing an inpainting deviation of the initial video frame relative to the to-be-processed video frame.

When determining the latent feature, the initial video frame may be compared with the to-be-processed video frame to obtain the inpainting deviation of the initial video frame undergone the image inpainting relative to the to-be-processed video frame, in other words, the latent feature. That is, the inpainting deviation is a difference between the initial video frame as obtained in S204 and the to-be-processed video frame.

The latent feature may be determined by a context-based video frame refinement module. To be specific, the to-be-processed video frame and the initial video frame may be inputted into the video frame refinement module to output the latent feature. A core of S205 may be to use the foregoing initial video frame undergone the image inpainting as a context to assist with video compression at the next stage. In some embodiments, the video frame refinement module may include a feature extractor and a context encoder. The video transmitting end may extract a feature from the initial video frame by using the feature extractor in the video frame refinement module to obtain a feature vector of the initial video frame, and use the feature vector of the initial video frame as a video frame compression context, then use the video frame compression context to assist in encoding the to-be-processed video frame. In some embodiments, a pixel matrix of the to-be-processed video frame and the video frame compression context may be spliced, and a first splicing result obtained through splicing is inputted into the context encoder to obtain the latent feature. For the process, reference may be made to FIG. 3. The latent feature may be represented by $y_t$.

In the foregoing manner, the feature vector of the initial video frame may reflect a feature of the initial video frame, and the pixel matrix of the to-be-processed video frame may reflect a feature of the to-be-processed video frame, so that an accurate latent feature may be obtained based on the pixel matrix and the video frame compression context.

The feature extractor may be represented by $f_{ex}$, and that the feature extractor extracts the feature from the initial video frame to obtain the video frame compression context may be represented by the following formula:

$$\bar{x} = f_{ex}\ (x_t^{warped})$$

$\bar{x}$ represents the video frame compression context, $x_t^{warped}$ represents the initial video frame, and $f_{ex}$ () represents the feature extractor.

The context encoder may be represented by $f_{enc}$, and that the context encoder encodes the first splicing result obtained through splicing the to-be-processed video frame and the video frame compression context to obtain the latent feature may be represented by the following formula:

$$y_t = f_{enc}(x_t | \bar{x})$$

$y_t$ represents the latent feature, $f_{enc}$ represents the context encoder, and $x_t$ represents the to-be-processed video frame, specifically refers to a corresponding pixel matrix of the to-be-processed video frame.

Network structures of the feature extractor and the context encoder are not limited in this embodiment of this application. In a possible implementation, the feature extractor may include one convolutional layer, two residual modules, and one convolutional layer. A size of the convolutional layer may be 3x3, and the convolutional layer may be represented as conv3x3. The feature extractor uses the initial video frame $x_t^{warped} \in \mathcal{R}^{3 \times H \times W}$ as input, which passes through one conv3$^x$3, two residual modules, and one conv3$\times$3 in sequence, and the feature extractor outputs a feature vector with 64 channels, that is, the video frame compression context. The video frame compression context may be represented by $\bar{x}$, and $\bar{x} \in \mathcal{R}^{64 \times H \times W}$ indicates a size of 64xHxW. H represents a height of the initial video frame, and W represents a width of the initial video frame. Compared with a commonly used residual compensation bar, the video frame compression context assists with encoding and decoding of a video frame from a feature domain, and can provide more flexible and diverse auxiliary information.

The context encoder includes three convolutional layers and a normalization module stacked. The normalization module may be of various types. Because generalized normalization (GDN) is more suitable for image reconstruction, the normalization used herein may be GDN.

In another possible implementation, when the latent feature is determined, a feature may be first extracted from the to-be-processed video frame to obtain a feature vector of the to-be-processed video frame, then the feature vector of the to-be-processed video frame and the video frame compression context are spliced, and the first splicing result obtained through splicing is inputted into the context encoder to obtain the latent feature. A specific implementation of determining the latent feature is not limited in this embodiment of this application, and any manner that can achieve a similar effect may be used as the implementation of determining the latent feature.

In embodiments, the method may further include S206 in which the video transmitting end performs video compression based on the first position information, the second position information, and the latent feature, to obtain a compressed video file.

The first position information, the second position information, and the latent feature may be obtained through S201 to S205. In addition, although the motion information is also obtained, to reduce consumption of a byte stream compared with related art, in this embodiment of this application, the first position information and the second position information obtained based on the key points are used to replace the motion information of the dense feature vector, to perform the video compression based on the first position information, the second position information, and the latent feature to obtain the compressed video file. During video communication, the video transmitting end may also send the compressed video file to the video receiving end.

When the affine transformation matrix is obtained in the foregoing method, to use the affine transformation matrix for decoding at the video receiving end, the affine transformation matrix may also be written into the compressed video file. In other words, a manner of performing the video compression based on the first position information, the second position information, and the latent feature to obtain the compressed video file may be to write the first position information, the second position information, the latent feature, and the affine transformation matrix into the compressed video file. In this way, when the video receiving end receives the compressed video file and decodes and reconstructs, based on the compressed video file, the to-be-processed video frame, accuracy of motion estimation can be improved by using the affine transformation matrix, so that a reconstruction effect is improved.

In some cases, the latent feature includes information that may reflect the inpainting deviation. The information may be numbers. Some numbers in the latent feature are significantly more likely to appear. To reduce information redundancy in the latent feature caused by such numbers, in a possible implementation, the video transmitting end may perform probabilistic modeling on the latent feature to obtain a distribution parameter. The distribution parameter is configured for representing distribution of different information in the latent feature, and then the distribution parameter is used to assist in performing arithmetic coding on the latent feature to obtain an encoded latent feature. In this case, the latent feature included in the compressed video file is an encoded latent feature. In other words, a manner of performing the video compression based on the first position information, the second position information, and the latent feature to obtain the compressed video file may be to write the first position information, the second position information, the encoded latent feature, and the distribution parameter into the compressed video file. The latent feature may be represented in the form of a feature map. Assuming that the latent feature $y_t$ follows the Laplace distribution, the distribution parameters may be $\mu_t$ and $\sigma_t$.

The distribution parameter may be obtained through the probabilistic modeling, which may reflect the distribution of different information in the latent feature, and then reflect probabilities of different information appearing in the latent feature, so that the latent feature may be encoded based on the distribution parameter, and fewer bits may be used to encode information with a higher probability, thereby further reducing redundant information in the latent feature.

In this embodiment of this application, the foregoing process may be implemented by using an entropy model, to be specific, the video frame refinement module may further include the entropy model, and the entropy model is used to perform probabilistic modeling on the latent feature to obtain the distribution parameter. Reference may be made to FIG. 3. In this case, a higher probability of specific information appearing in the latent feature indicates smaller entropy outputted by the entropy model.

In a possible implementation, to improve accuracy of the probabilistic modeling, a prior prediction structure that integrates hierarchical information, spatial information, and temporal information may be used to predict a more accurate distribution parameter. In this case, a manner of performing the probabilistic modeling on the latent feature to obtain the distribution parameter of different information in the latent feature may be to perform hierarchical prior learning on the latent feature to obtain first prior information (that is, hierarchical information), to perform spatial prior learning on the latent feature to obtain second prior information (that is, spatial information), and to perform temporal prior learning on the latent feature to obtain third prior information (that is, temporal information), and then to integrate the first prior information, the second prior information, and the third prior information to obtain the distribution parameter. The first prior information may be obtained through hierarchical prior learning by using a hyper prior model (the process is referred to as a hierarchical prior branch), the second prior information may be obtained through spatial prior learning by using an autoregressive network (the process is referred to as a spatial prior branch), and the third prior information may be obtained through temporal prior learning by using a temporal prior encoder (the process is referred to as a temporal prior branch). In this case, when the entropy model is used for probabilistic modeling (in other words, the entropy model is used as the prior prediction structure), the entropy model may include the hyper prior model, the autoregressive network, and the temporal prior encoder.

The hyper prior model may include a hyper prior encoder (HPE) and a hyper prior decoder (HPD). Network structures of the hyper prior encoder and the hyper prior decoder are not limited in this embodiment of this application. For example, the hyper prior encoder may include three convolutional layers, and the hyper prior decoder may include three deconvolutional layers. A network structure of the temporal prior encoder is not limited in this embodiment of this application. For example, the temporal prior encoder may include three multi-layer deconvolutional layers, an inverse normalization layer, for example, image generalized normalization (IGDN), and one convolutional layer (for example, conv3x3).

Based on the foregoing prior prediction structure, a specific process of the probabilistic modeling may be shown in FIG. 4. In FIG. 4, the entropy model is used as an example, and an exemplary diagram of performing the probabilistic modeling by using the entropy model is shown. The hierarchical prior branch uses $y_t$ as input, and is quantized after passes through the hyper prior encoder including three convolutional layers, and then the hierarchical prior branch outputs a hierarchical prior feature map with a size of $96 \mathrm{x} \dfrac{\mathrm{H}}{16} \mathrm{x} \dfrac{\mathrm{W}}{16}$ (that is, the first prior information) by using the hyper prior decoder including three deconvolutional layers. Quantization may be represented by Q. After the spatial prior branch quantizes input $y_t$, a spatial prior feature map with a size of $192 \mathrm{x} \dfrac{\mathrm{H}}{16} \mathrm{x} \dfrac{\mathrm{W}}{16}$ (that is, the second prior information) is obtained over the autoregressive network. The temporal prior branch uses the video frame compression context $\overline{x}$ as input, and a temporal prior feature map with a size of $192 \mathrm{x} \dfrac{\mathrm{H}}{16} \mathrm{x} \dfrac{\mathrm{W}}{16}$ (that is, the third prior information) is obtained by using the temporal prior encoder including three multi-layer deconvolutional layers, an inverse normalization layer, and one conv3x3. The first prior information, the second prior information, and the third prior information are spliced in a channel dimension and inputted into stacked three-layer convolution to obtain $\mu_t$ and $\sigma_t$ for predicting a probability model for $y^t$. The probability model is configured to guide arithmetic encoding (AE) and arithmetic decoding (AD) of quantized $y_t$ (the quantized $y_t$ may be represented by $\hat{y}^t$, reference may be made to FIG. 3), to reduce byte stream consumption of the compressed video file. Because the feature vector of the initial video frame, that is, the video frame compression context $\overline{x}$, is used, estimation of the probability model may be more accurate.

The prior prediction structure that integrates the hierarchical information, the spatial information, and the temporal information is used, the distribution parameter of the latent feature may be estimated more accurately, so that a byte stream consumed by compressing the latent feature is reduced, thereby reducing a byte stream required for video frame compression.

In a possible implementation, during the hierarchical prior learning of the hyper prior model, arithmetic encoding and arithmetic decoding may be performed on a quantized result, and an outputted result of the arithmetic decoding is inputted into the hyper prior decoder.

After the distribution parameter is obtained, the distribution parameter may be used to assist with video compression and subsequent video decoding. In a possible implementation, to use the distribution parameter to assist with the video compression, the distribution parameter needs to be further processed to obtain cumulative probability density, to use the cumulative probability density to perform the video compression or the video decoding. The video compression may also be referred to as video encoding, and may be implemented by an arithmetic encoder. There are many implementation versions of the arithmetic encoder, and an open-source version is used in this embodiment of this application.

In an example in which the distribution parameters are $\mu_t$ and $\sigma_t$, a formula for calculating the cumulative probability density by using the distribution parameters is as follows:

$$\mathrm{cdf} = G(y_t + \tfrac{1}{2}) - G(y_t - \tfrac{1}{2})$$

cdf represents the cumulative probability density, G () represents the probabilistic modeling, and $y_t$ represents the latent feature.

It can be learned from the foregoing technical solution that when video compression is required for the to-be-processed video frame, the to-be-processed video frame and the previous video frame of the to-be-processed video frame may be obtained. The previous video frame is a video frame adjacent to the to-be-processed video frame and before the to-be-processed video frame in a video frame sequence. Then, the key points are extracted from the to-be-processed video frame and the previous video frame respectively to obtain the first position information of the key point of the to-be-processed video frame and the second position information of the key point of the previous video frame, to perform the motion estimation based on the first position information and the second position information, to obtain the motion information of the to-be-processed video frame relative to the previous video frame. The image inpainting is performed based on the motion information and the previous video frame to obtain the initial video frame. To avoid distortion of a reconstructed picture when complex pictures such as motion of a plurality of objects and an object that does not appear in the previous video frame are included in the to-be-processed video frame, in this application, the latent feature may be further determined based on the to-be-processed video frame and the initial video frame during the video compression, and the inpainting deviation of the initial video frame relative to the to-be-processed video frame is represented by using the latent feature, so that the compressed video file is obtained by performing the video compression based on the first position information, the second position information, and the latent feature. In this way, after obtaining the compressed video file, a video receiving end may obtain the motion information by calculating the first position information and the second position information, and perform image inpainting based on the motion information and the previous video frame to obtain the initial video frame. Because the compressed video file further includes the latent feature, and the latent feature represents the inpainting deviation of the initial video frame relative to the to-be-processed video frame, the video receiving end may further use the latent feature to perform further inpainting on the initial video frame to alleviate distortion of a video frame caused by complex picture motion and improve algorithm robustness. In addition, the compressed video file includes the first position information and the second position information instead of a dense feature vector representing the motion information, so that in a case that the video compression is implemented, a byte stream consumed by the motion information is greatly reduced, and a transmission bandwidth of the compressed video file is reduced.

Compared with a residual-based method such as deep video compression provided in related art, a context-based method can achieve better video compression by compensating a video frame in feature space.

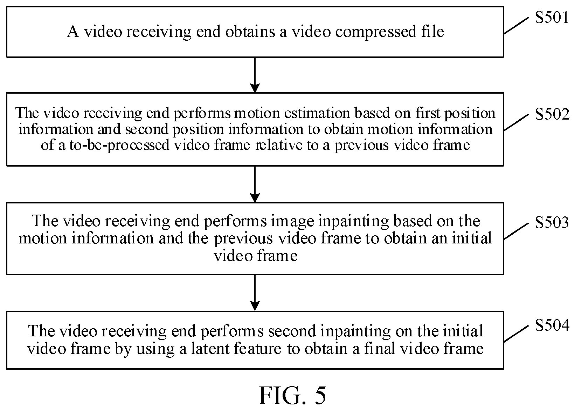

The foregoing embodiment describes the video compression method. After the video transmitting end compresses the to-be-processed video frame by using the foregoing method to obtain the compressed video file, and sends the compressed video file to the video receiving end, the video receiving end may perform video decoding based on the compressed video file to reconstruct the to-be-processed video frame. A video decoding method is described in detail below. Refer to FIG. 5.

In embodiments, the method may include S501, in which a video receiving end obtains a compressed video file.

The video receiving end may obtain the compressed video file in such a manner that the video receiving end receives the compressed video file sent by a video transmitting end. Content included in the compressed video file is content added to the compressed video file by the video transmitting end. Generally, the compressed video file includes at least first position information of a first key point of a to-be-processed video frame, second position information of a second key point of a previous video frame, and a latent feature. The previous video frame is a video frame adjacent to the to-be-processed video frame and before the to-be-processed video frame in a video frame sequence.

In embodiments, the method may include S502 in which the video receiving end performs motion estimation based on the first position information and the second position information to obtain motion information of the to-be-processed video frame relative to the previous video frame.

The video receiving end may perform the motion estimation based on the received first position information and second position information, to obtain the motion information of the to-be-processed video frame relative to the previous video frame, to perform image inpainting based on the motion information.

In a possible implementation, the video receiving end may perform the motion estimation based on the first position information and the second position information to obtain the motion information of the to-be-processed video frame relative to the previous video frame in such a manner that thin plate spline transformation is performed based on the first position information and the second position information to obtain a thin plate spline transformation matrix, then the previous video frame is transformed based on the thin plate spline transformation matrix to obtain a transformed image, and a contribution graph is outputted over a motion network based on the transformed image. The contribution graph is configured for representing a contribution of the thin plate spline transformation matrix to motion of each pixel on the previous video frame. In this way, the motion information may be calculated based on the contribution graph and the thin plate spline transformation matrix.

In a possible implementation, the compressed video file further includes an affine transformation matrix, and a manner of transforming the previous video frame based on the thin plate spline transformation matrix to obtain the transformed image may be to transform the previous video frame by using the thin plate spline transformation matrix and the affine transformation matrix to obtain the transformed image.

The transformed image is obtained by using the affine transformation matrix, so that possible background motion is taken into consideration when the transformed image is determined, to improve accuracy of subsequent motion estimation.

In a possible implementation, a manner of outputting the contribution graph over the motion network based on the transformed image may be to output the contribution graph and mask information over the motion network based on the transformed image. In this case, a manner of performing the image inpainting based on the motion information and the previous video frame to obtain the initial video frame may be to perform the image inpainting based on the motion information, the mask information, and the previous video frame to obtain the initial video frame.

The mask information is configured for indicating that a focus of the image inpainting is to be put more on a foreground (that is, a first object), to reduce an impact of a background area on foreground image inpainting, to improve an image inpainting effect.

The calculation of the foregoing motion information may be implemented over the motion network. For a specific implementation of the motion network calculating the motion information, reference may be made to the embodiment corresponding to FIG. 2. Details are not described herein again.

In embodiments, the method may further include S503 in which the video receiving end performs the image inpainting based on the motion information and the previous video frame to obtain the initial video frame.

The motion information reflects a difference between the to-be-processed video frame and the previous video frame, so that the video receiving end may perform the image inpainting based on the motion information and the previous video frame to obtain the initial video frame.

In embodiments, the method may further include S504 in which the video receiving end performs further inpainting on the initial video frame by using the latent feature to obtain a final video frame.

After obtaining the initial video frame, to avoid distortion of a reconstructed picture when complex pictures such as motion of a plurality of objects and an object that does not appear in the previous video frame are included in the to-be-processed video frame, in this embodiment of this application, the video receiving end may further use the latent feature included in the compressed video file to perform further inpainting on the initial video frame to obtain the final video frame with higher quality (reference may be made to FIG. 3). In some embodiments, the video receiving end may extract a feature from the initial video frame to obtain a feature vector of the initial video frame, use the feature vector of the initial video frame as a video frame compression context, and perform further inpainting in combination with the latent feature to obtain the final video frame.

The feature extraction in this operation may be implemented by using a feature extractor, and the final further inpainting may be implemented by a context decoder. In a possible implementation, the latent feature may be quantized first, and then the further inpainting may be performed based on the quantized latent feature to obtain the final video frame. A formula for reconstructing to obtain the final video frame is as follows:

$$\hat{x}_t = f_{dec}\big(\text{round}\big(f_{enc}(x_t|\bar{x})\big)|\bar{x}\big)$$

$$\bar{x} = f_{ex}\big(x_t^{warped}\big)$$

$\hat{x}_t$ represents the final video frame, $f_{dec}()$ represents the context decoder, round() represents the quantization, $f_{enc}(x_t|\bar{x})$ represents the latent feature, $f_{enc}()$ represents a context encoder, $x_t$ represents the to-be-processed video frame (which may in some embodiments refer to a corresponding pixel matrix of the to-be-processed video frame), $\bar{x}$ represents the video frame compression context, $x_t^{warped}$ represents the initial video frame, and $f_{ex}()$ represents the feature extractor. A processing process of $f_{enc}(x_t|\bar{x})$ may be implemented at the video transmitting end, and the video receiving end may directly use the obtained latent feature.

For implementations of functions of the foregoing context encoder and feature extractor, reference may be made to the embodiment corresponding to FIG. 2, which are not described herein again.

In this embodiment of this application, the context decoder may include three multi-layer deconvolutional layers, an inverse normalization layer IGDN, one conv3x3, two residual modules, and one conv3×3 stacked. The quantized latent feature is inputted into the context decoder, and a reconstructed image feature is obtained after passing through the three multi-layer deconvolutional layers and the inverse normalization layer IGDN of the context decoder. The reconstructed image feature and the video frame compression context $\bar{x}$ are spliced in a channel direction and inputted into the subsequent convolutional layer and residual modules to obtain the final video frame $\hat{x}_t$.

In a possible implementation, the compressed video file may further include a distribution parameter. In this case, the latent feature included in the compressed video file may be a latent feature obtained by arithmetic encoding based on the distribution parameter. In this case, the further inpainting is performed on the initial video frame by using the latent feature. Before obtaining the final video frame, the distribution parameter may be used to assist an encoded latent feature in performing arithmetic decoding to obtain a latent feature, and then the latent feature undergone the arithmetic decoding may be used to perform the further inpainting.

Embodiments corresponding to FIG. 2 and FIG. 5 describe an entire process of video compression and video decoding. The foregoing entire process may be referred to as a key point-based AI video compression technology, which may be implemented by a video compression model. In a video communication scenario, the foregoing method may be integrated into video communication software as a video communication tool, so that video communication experience of a user is ensured. It is noted that the embodiments described with reference to FIG. 2 to FIG. 5 are merely exemplary, and it is not limited that the respective method must include all the steps as described and illustrated; rather, the video compression method and the video decoding method in the application may include some or all of the steps as listed, and the steps may be combined with each other arbitrarily to form various embodiments of the application.

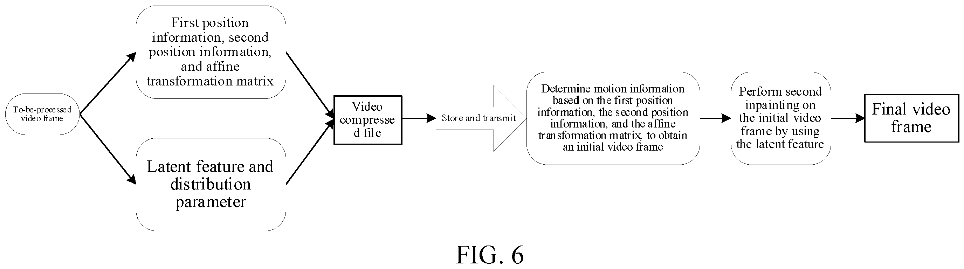

The video compression model provided in this embodiment of this application is mainly divided into a key point-based motion estimation module and a context-based video frame refinement module. The motion estimation module includes four sub-modules: a key point detector, a background motion prediction network, a motion network, and an image inpainting network. The context-based video frame refinement module mainly includes two parts: a context encoder and a context decoder. For a specific process of AI video compression by using the video compression model, reference may be made to FIG. 6. The process is mainly divided into two stages. A first stage is to predict the motion information based on the to-be-processed video frame and the previous video frame, to obtain the initial video frame. A second stage is to encode and decode the to-be-processed video frame by using the initial video frame as a prior context to obtain the final video frame.

For the to-be-processed video frame, the video transmitting end writes the first position information and the second position information outputted by the key point detector in the motion estimation module, the affine transformation matrix outputted over the background motion prediction network in the motion estimation module, and the latent feature and the distribution parameter outputted by the context-based video frame refinement module into the compressed video file, stores the compressed video file, and transmits the compressed video file to the video receiving end. The video receiving end determines the motion information over the motion network based on the first position information, the second position information, and the affine transformation matrix, and then performs image inpainting over the image inpainting network based on the motion information to obtain the initial video frame. Then, the video receiving end performs further inpainting on the initial video frame by using the latent feature to obtain the final video frame.

A size of the compressed video file transmitted in the foregoing method is significantly reduced compared with the to-be-processed video frame, so that a file transmission bandwidth can be reduced.

The video compression model in this embodiment of this application may be obtained through pre-training, and training data may come from VoxCeleb (a data set). A total of 145,569 videos of 256x256 are used as training sets and 4,911 videos are used as test sets. A quantity of video frames in the training data ranges from 64 to 1024. During training, the video compression model may be configured to train for 2e6 steps in total. An optimizer uses Adam by default, and an initial learning rate is 1e-4. After 1.8e6 steps of training, a learning rate is reduced to 1e-5. During training, a loss function may be used to optimize a model parameter. A formula of the loss function may be as follows:

$$\mathrm{Loss} = \mathrm{R} + \lambda_1(\mathrm{D}_1 + \mathrm{D}_2)$$

R is a bit rate of the compressed video file, $D_1$ represents inpainting quality of the initial video frame, $D_2$ represents inpainting quality of the final video frame, and is calculated in the perception loss form, $\lambda$ represents an adjustment factor, and a default value is $\lambda = 0.0001$.

It can be learned through analysis that performance of the video compression method provided in this embodiment of this application is better than a method provided in related art. In this embodiment of this application, performance of a video compression model based on facial landmark (which is denoted as solution 1), a video compression model using only key points (which is denoted as solution 2), and the video compression model provided in this embodiment of this application (which is denoted as solution 3) are compared in different aspects.

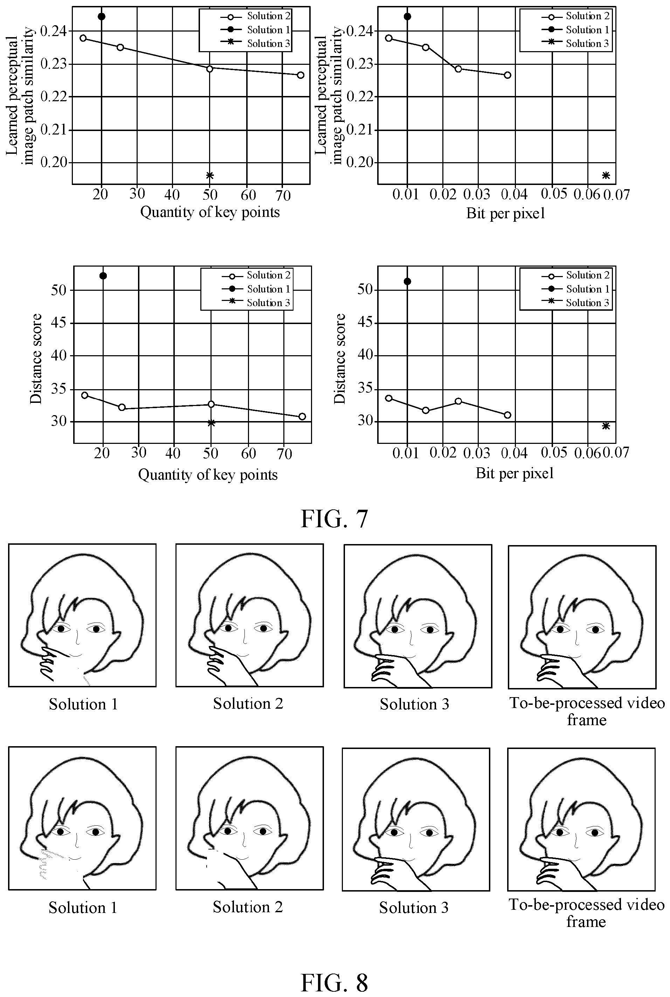

According to an aspect of subjective quality of an image, for solution 2, performance of models with a quantity of key points of 15, 25, 50, and 75 are compared. For solution 3, a quantity of used key points is 50. Subjective quality of different models is evaluated by using a commonly used learned perceptual image patch similarity (LPIPS) and a frechet inception distance score (FID) indicator. Smaller LPIPS and FID both indicate better quality. Refer to FIG. 7. In FIG. 7, vertical axes represent the subjective quality of an image, horizontal axes represent the quantity of key points (Num_keypoints), and represent the bit rate (which is also referred to as a bit per pixel (bpp)).

It can be learned from FIG. 7 that as the quantity of key points increases, the overall subjective quality of an image improves. Comparing the three solutions, when solution 2 with fewer key points is used, in other words, with less bit stream consumption, better subjective quality may still be achieved by using solution 2. This proves effectiveness of the model. It can be learned that from the second column, under specific bpp consumption, the subjective quality of an image in solution 2 can be further improved by using solution 3.

According to an aspect of reconstruction performance of a complex scenario, the performance of solution 1, solution 2, and solution 3 are compared in a case that there is a complex picture such as a moving object in a video frame. Refer to FIG. 8. When a moving hand appears in a picture, the hand in an image restored by using solution 1 is very blurry, in other words, solution 1 is basically ineffective, the image in solution 2 has different degrees of distortions, and the image can be reconstructed better by using solution 3. Therefore, in subsequent use, solution 2 may be used to perform video compression on simple video frames to save bit stream consumption, and solution 3 may be used to perform video compression in a complex scenario to ensure picture quality.

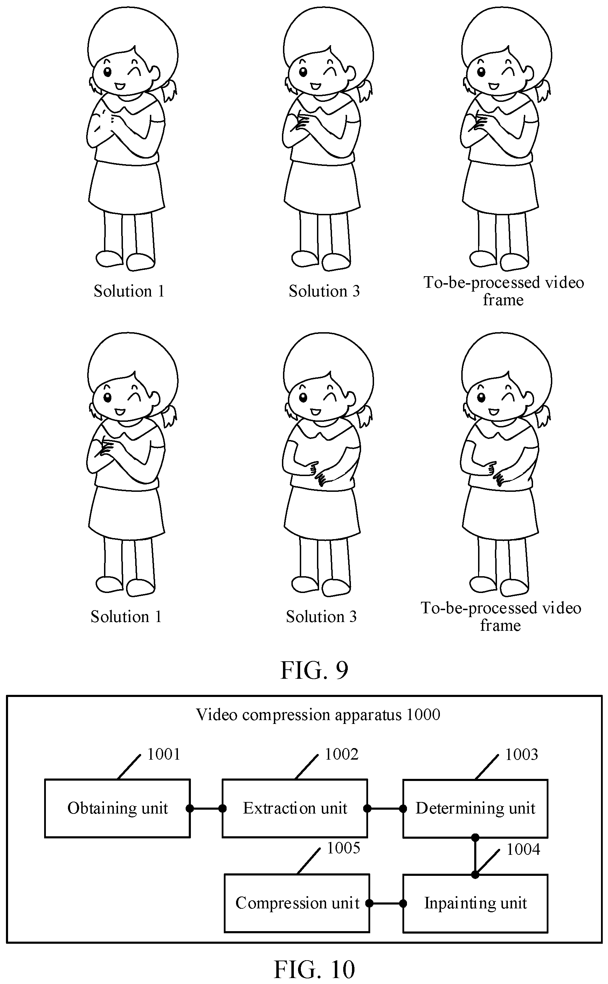

A comparison is performed by using a zero-shot test in a non-face scenario, for example, the performance of the foregoing solution 1 and solution 3 may be directly tested on an out-of-domain dataset of the non-face scenario, that is, the zero-shot test. Refer to FIG. 9. It can be learned from the second row in FIG. 9 that when a hand moves, the hand cannot be restored to be the same as a hand in a to-be-processed video frame by using solution 1. It can be learned from the first row that even if the hand can be restored, the hand restored by using solution 1 is fuzzy, so that solution 1 is basically unusable in the non-face scenario, while solution 3 is still applicable to the non-face scenario.

In this application, the implementations in the foregoing aspects may be further combined to provide more implementations.

Based on the video compression method provided in the embodiments corresponding to FIG. 2, an embodiment of this application further provides a video compression apparatus 1000. Refer to FIG. 10. The video compression apparatus 1000 includes an obtaining unit 1001, an extraction unit 1002, a determining unit 1003, an inpainting unit 1004, and a compression unit 1005.

The obtaining unit 1001 is configured to obtain a to-be-processed video frame and a previous video frame of the to-be-processed video frame. The previous video frame is a video frame adjacent to the to-be-processed video frame and before the to-be-processed video frame in a video frame sequence.

The extraction unit 1002 is configured to extract a key point from the to-be-processed video frame to obtain first position information of a first key point in the to-be-processed video frame, and extract a key point from the previous video frame to obtain second position information of a second key point in the previous video frame.

The determining unit 1003 is configured to perform motion estimation based on the first position information and the second position information to obtain motion information of the to-be-processed video frame relative to the previous video frame.

The inpainting unit 1004 is configured to perform image inpainting based on the motion information and the previous video frame to obtain an initial video frame.

The determining unit 1003 is further configured to determine a latent feature based on the to-be-processed video frame and the initial video frame. The latent feature represents an inpainting deviation of the initial video frame relative to the to-be-processed video frame.

The compression unit 1005 is configured to perform video compression based on the first position information, the second position information, and the latent feature to obtain a compressed video file.

In a possible implementation, the determining unit 1003 is configured to:

extract a feature from the initial video frame by using a feature extractor to obtain a feature vector of the initial video frame, and use the feature vector of the initial video frame as a video frame compression context; and

splice a pixel matrix of the to-be-processed video frame and the video frame compression context, and input a first splicing result obtained through the splicing into a context encoder to obtain the latent feature.

In a possible implementation, the apparatus further includes a modeling unit and an encoding unit.

The modeling unit is configured to perform probabilistic modeling on the latent feature to obtain a distribution parameter. The distribution parameter is configured for representing distribution of different information in the latent feature.

The encoding unit is configured to use the distribution parameter to assist in performing arithmetic coding on the latent feature to obtain an encoded latent feature.

The compression unit 1005 is configured to: write the first position information, the second position information, the encoded latent feature, and the distribution parameter into the compressed video file.

In a possible implementation, the modeling unit is configured to:

perform hierarchical prior learning on the latent feature to obtain first prior information;

perform spatial prior learning on the latent feature to obtain second prior information;

perform temporal prior learning on the latent feature to obtain third prior information; and

integrate the first prior information, the second prior information, and the third prior information to obtain the distribution parameter.

In a possible implementation, the determining unit 1003 is configured to:

perform thin plate spline transformation based on the first position information and the second position information to obtain a thin plate spline transformation matrix;
transform the previous video frame based on the thin plate spline transformation matrix to obtain a transformed image;
output a contribution graph over a motion network based on the transformed image, the contribution graph being configured for representing a contribution of the thin plate spline transformation matrix to motion of each pixel on the previous video frame; and calculate the motion information based on the contribution graph and the thin plate spline transformation matrix.

In a possible implementation, the determining unit 1003 is further configured to:
splice the to-be-processed video frame and the previous video frame, and input a second splicing result obtained through the splicing into a background motion prediction network to obtain an affine transformation matrix, the affine transformation matrix being configured for representing background motion of the to-be-processed video frame relative to the previous video frame.

The determining unit 1003 is configured to:
transform the previous video frame by using the thin plate spline transformation matrix and the affine transformation matrix to obtain the transformed image.

The compression unit 1005 is configured to:
write the first position information, the second position information, the latent feature, and the affine transformation matrix into the compressed video file.

In a possible implementation, the determining unit 1003 is configured to:
output the contribution graph and mask information over the motion network based on the transformed image.

The inpainting unit 1004 is configured to:
perform image inpainting based on the motion information, the mask information, and the previous video frame

to obtain the initial video frame.

In a possible implementation, the first key point includes a key point of a body part included in a first object in the to-be-processed video frame, and the second key point includes a key point of a body part included in a second object in the previous video frame.

In a possible implementation, the extraction unit 1002 is configured to:

recognize the body part included in the first object in the to-be-processed video frame, and recognize the body part included in the second object in the previous video frame; and

determine, based on a mapping relationship between a body part and a key point, a key point corresponding to the body part included in the first object, determine the first position information of the key point corresponding to the body part included in the first object in the to-be-processed video frame, determine, based on the mapping relationship between the body part and the key point, a key point corresponding to the body part included in the second object, and determine second position information of the key point corresponding to the body part included in the second object in the previous video frame.

In a possible implementation, the extraction unit 1002 is configured to:
extract the key point from the to-be-processed video frame by using a key point detection model to obtain the first position information, and extract the key point from the previous video frame by using the key point detection model to obtain the second position information, the key point detection model being obtained through training a training sample, the training sample including a plurality of sample images, a sample object in each sample image including a body part, and body parts included in sample objects in the plurality of sample images including various body parts.

It can be learned from the foregoing technical solution that when video compression is required for the to-be-processed video frame, the to-be-processed video frame and the previous video frame of the to-be-processed video frame may be obtained. The previous video frame is a video frame adjacent to the to-be-processed video frame and before the to-be-processed video frame in a video frame sequence. Then, the key points are extracted from the to-be-processed video frame and the previous video frame respectively to obtain the first position information of the key point of the to-be-processed video frame and the second position information of the key point of the previous video frame, to perform the motion estimation based on the first position information and the second position information, to obtain the motion information of the to-be-processed video frame relative to the previous video frame. The image inpainting is performed based on the motion information and the previous video frame to obtain the initial video frame. To avoid distortion of a reconstructed picture when complex pictures such as motion of a plurality of objects and an object that does not appear in the previous video frame are included in the to-be-processed video frame, in this application, the latent feature may be further determined based on the to-be-processed video frame and the initial video frame during the video compression, and the inpainting deviation of the initial video frame relative to the to-be-processed video frame is represented by using the latent feature, so that the compressed video file is obtained by performing the video compression based on the first position information, the second position information, and the latent feature. In this way, after obtaining the compressed video file, a video receiving end may obtain the motion information by calculating the first position information and the second position information, and perform image inpainting based on the motion information and the previous video frame to obtain the initial video frame. Because the compressed video file further includes the latent feature, and the latent feature represents the inpainting deviation of the initial video frame relative to the to-be-processed video frame, the video receiving end may further use the latent feature to perform further inpainting on the initial video frame to alleviate distortion of a video frame caused by complex picture motion and improve algorithm robustness. In addition, the compressed video file includes the first position information and the second position information instead of a dense feature vector representing the motion information, so that in a case that the video compression is implemented, a byte stream consumed by the motion information is greatly reduced, and a transmission bandwidth of the compressed video file is reduced.

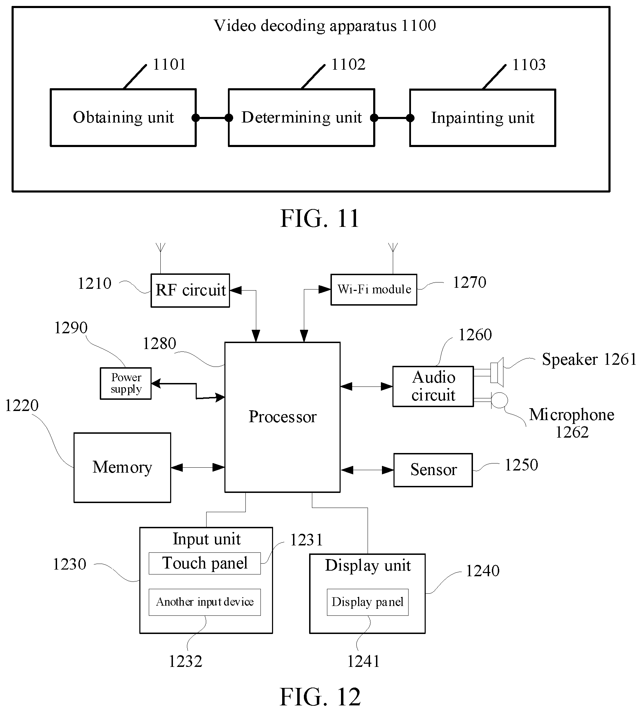

Based on the video decoding method provided in the embodiments corresponding to FIG. 5, an embodiment of this application further provides a video decoding apparatus 1100. Refer to FIG. 11. The video decoding apparatus 1100 includes an obtaining unit 1101, a determining unit 1102, and an inpainting unit 1103.

The obtaining unit 1101 is configured to obtain a compressed video file. The compressed video file includes first position information of a first key point of a to-be-processed video frame, second position information of a second key point of a previous video frame, and a latent feature, and the previous video frame is a video frame adjacent to the to-be-processed video frame and before the to-be-processed video frame in a video frame sequence.

The determining unit 1102 is configured to perform motion estimation based on the first position information and the second position information to obtain motion information of the to-be-processed video frame relative to the previous video frame.

The inpainting unit 1103 is configured to perform image inpainting based on the motion information and the previous video frame to obtain an initial video frame.

The inpainting unit 1103 is further configured to perform further inpainting on the initial video frame by using the latent feature to obtain a final video frame.

In a possible implementation, the compressed video file further includes a distribution parameter, and the latent feature included in the compressed video file is a latent feature obtained by arithmetic encoding based on the distribution parameter. The apparatus further includes a decoding unit.

The decoding unit is configured to, before the further inpainting is performed on the initial video frame by using the latent feature to obtain the final video frame, use the distribution parameter to assist in performing arithmetic decoding on an encoded latent feature to obtain the latent feature.

In a possible implementation, the determining unit 1102 is configured to:

perform thin plate spline transformation based on the first position information and the second position information to obtain a thin plate spline transformation matrix;

transform the previous video frame based on the thin plate spline transformation matrix to obtain a transformed image;

output a contribution graph over a motion network based on the transformed image, the contribution graph being configured for representing a contribution of the thin plate spline transformation matrix to motion of each pixel on the previous video frame; and

calculate the motion information based on the contribution graph and the thin plate spline transformation matrix.

In a possible implementation, the compressed video file further includes an affine transformation matrix, and the determining unit 1102 is configured to:
transform the previous video frame by using the thin plate spline transformation matrix and the affine transformation matrix to obtain the transformed image.

In a possible implementation, the determining unit 1102 is configured to:

output the contribution graph and mask information over the motion network based on the transformed image; and

the performing image inpainting based on the motion information and the previous video frame to obtain an initial video frame includes:
performing image inpainting based on the motion information, the mask information, and the previous video frame to obtain the initial video frame.

An embodiment of this application further provides a computer device. The computer device may be used as a video transmitting end or a video receiving end. The computer device may be, for example, a terminal, and an example in which the terminal is a smartphone is used.

FIG. 12 is a block diagram of a structure of a part of a smartphone according to an embodiment of this application. Refer to FIG. 12. The smartphone includes: components such as a radio frequency (RF for short) circuit 1210, a memory 1220, an input unit 1230, a display unit 1240, a sensor 1250, an audio circuit 1260, a wireless fidelity (Wi-Fi for short) module 1270, a processor 1280, and a power supply 1290. The input unit 1230 may include a touch panel 1231 and another input device 1232. The display unit 1240 may include a display panel 1241. The audio circuit 1260 may include a speaker 1261 and a microphone 1262. The structure of the smartphone shown in FIG. 12 does not constitute a limitation on the smartphone, and the smartphone may include more or fewer components than those shown in the figure, or a combination of some components, or a different component deployment may be used.

The memory 1220 may be configured to store a software program and module. The processor 1280 runs the software program and module stored in the memory 1220, to implement various functional applications and data processing of the smartphone. The memory 1220 may mainly include a program storage area and a data storage area. The program storage area may store an operating system, an application that is required by at least one function (for example, a sound playback function and an image display function), and the like. The data storage area may store data (for example, audio data and a phone book) created according to use of the smartphone and the like. In addition, the memory 1220 may include a high-speed random access memory, and may alternatively include a non-volatile memory, for example, at least one magnetic disk storage device, a flash memory device, or another volatile solid-state storage device.

The processor 1280 is a control center of the smartphone, and is connected to various parts of the entire smartphone by using various interfaces and lines. Various functions and data processing of the smartphone are performed by running or executing the software program and/or the module stored in the memory 1220, and invoking data stored in the memory 1220. In some embodiments, the processor 1280 may include one or more processing units. Preferably, the processor 1280 may integrate an application processor and a modem processor. The application processor mainly processes an operating system, a user interface, an application, and the like. The modem processor mainly processes wireless communication. The foregoing modem processor may alternatively not be integrated into the processor 1280.

In this embodiment, the processor 1280 in the smartphone may perform the following operations:

obtaining a to-be-processed video frame and a previous video frame of the to-be-processed video frame, the previous video frame being a video frame adjacent to the to-be-processed video frame and before the to-be-processed video frame in a video frame sequence;

extracting a key point from the to-be-processed video frame to obtain first position information of a first key point in the to-be-processed video frame, and extracting a key point from the previous video frame to obtain second position information of a second key point in the previous video frame;

performing motion estimation based on the first position information and the second position information to obtain motion information of the to-be-processed video frame relative to the previous video frame;

performing image inpainting based on the motion information and the previous video frame to obtain an initial video frame;

determining a latent feature based on the to-be-processed video frame and the initial video frame, the latent feature representing an inpainting deviation of the initial video frame relative to the to-be-processed video frame; and

performing video compression based on the first position information, the second position information, and the latent feature to obtain a compressed video file.

Alternatively, the processor 1280 may perform the following operations:

obtaining a compressed video file, the compressed video file including first position information of a first key point of a to-be-processed video frame, second position information of a second key point of a previous video frame, and a latent feature, the previous video frame being a video frame adjacent to the to-be-processed video frame and before the to-be-processed video frame in a video frame sequence;

performing motion estimation based on the first position information and the second position information to obtain motion information of the to-be-processed video frame relative to the previous video frame;

performing image inpainting based on the motion information and the previous video frame to obtain an initial video frame; and

performing further inpainting on the initial video frame by using the latent feature to obtain a final video frame.

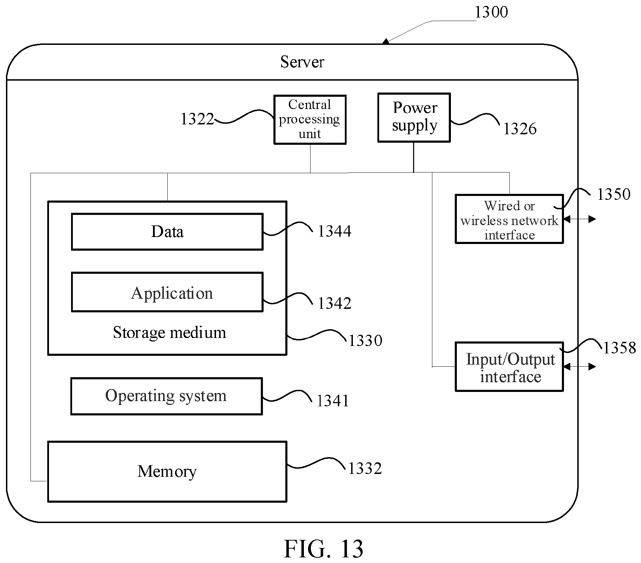

The computer device provided in this embodiment of this application may alternatively be a server. FIG. 13 is a diagram of a structure of a server 1300 according to an embodiment of this application. The server 1300 may vary greatly due to different configurations or performance. The server 1300 may include one or more processors, for example, a central processing unit (CPU for short) 1322 and a memory 1332, and one or more storage media 1330 (for example, one or more mass storage devices) that store an application 1342 or data 1344. The memory 1332 and the storage medium 1330 may be used for temporary storage or persistent storage. A program stored in the storage medium 1330 may include one or more modules (not shown), and each module may include a series of instruction operations on the server. Further, the central processing unit 1322 may be configured to communicate with the storage medium 1330 and perform, on the server 1300, the series of instruction operations in the storage medium 1330.

The server 1300 may further include one or more power supplies 1326, one or more wired or wireless network interfaces 1350, one or more input/output interfaces 1358, and/or one or more operating systems 1341, for example, Windows ServerTM, Mac OS XTM, UnixTM, LinuxTM, or FreeB SDTM.

In this embodiment, the central processing unit 1322 in the server 1300 may perform the following operations:

obtaining a to-be-processed video frame and a previous video frame of the to-be-processed video frame, the previous video frame being a video frame adjacent to the to-be-processed video frame and before the to-be-processed video frame in a video frame sequence;

extracting a key point from the to-be-processed video frame to obtain first position information of a first key point in the to-be-processed video frame, and extracting a key point from the previous video frame to obtain second position information of a second key point in the previous video frame;

performing motion estimation based on the first position information and the second position information to obtain motion information of the to-be-processed video frame relative to the previous video frame;

performing image inpainting based on the motion information and the previous video frame to obtain an initial video frame;

determining a latent feature based on the to-be-processed video frame and the initial video frame, the latent feature representing an inpainting deviation of the initial video frame relative to the to-be-processed video frame; and

performing video compression based on the first position information, the second position information, and the latent feature to obtain a compressed video file.

Alternatively, the central processing unit 1322 may perform the following operations:

obtaining a compressed video file, the compressed video file including first position information of a first key point of a to-be-processed video frame, second position information of a second key point of a previous video frame, and a latent feature, the previous video frame being a video frame adjacent to the to-be-processed video frame and before the to-be-processed video frame in a video frame sequence;

performing motion estimation based on the first position information and the second position information to obtain motion information of the to-be-processed video frame relative to the previous video frame;

performing image inpainting based on the motion information and the previous video frame to obtain an initial video frame; and

performing further inpainting on the initial video frame by using the latent feature to obtain a final video frame.

According to an aspect of this application, a computer-readable storage medium is provided. The computer-readable storage medium is configured to store program code, and the program code is configured for performing the video compression method or the video decoding method described in the foregoing embodiments.

According to an aspect of this application, a computer program product is provided. The computer program product includes a computer program, and the computer program is stored in a computer-readable storage medium. A processor of a computer device reads the computer program from the computer-readable storage medium, and the processor executes the computer program, to cause the computer device to perform the method provided in various exemplary implementations in the foregoing embodiments.

The descriptions of processes or structures corresponding to the accompanying drawings have respective focuses. For a part that is not described in detail in a process or structure, reference may be made to related descriptions of another process or structure.

The terms such as "first", "second", "third", "fourth" (if any) in the specification of this application and in the foregoing accompanying drawings are used for distinguishing similar objects and not necessarily used for describing any particular order or sequence. Data used in this way is interchangeable where appropriate, so that embodiments of this application described here, for example, can be implemented in an order other than those illustrated or described here. Moreover, the terms "include", "have", and any other variants are intended to cover the non-exclusive inclusion, for example, a process, method, system, product, or device that includes a list of operations or units is not necessarily limited to those expressly listed operations or units, but may include other operations or units not expressly listed or inherent to such a process, method, product, or device.

In the several embodiments provided in this application, the disclosed systems, apparatuses, and methods may be implemented in other manners. For example, the apparatus embodiments described above are merely examples. For example, division into the units is merely a logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separated, and components displayed as units may or may not be physical units, may be located in one place, or may be distributed on a plurality of network units. Some or all of the units may be selected according to actual needs to achieve the objectives of the solutions of embodiments.

In addition, functional units in embodiments of this application may be integrated into one processing unit, or each of the units may be physically separated, or two or more units may be integrated into one unit. The integrated unit may be implemented in the form of hardware, or may be implemented in the form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technologies, all or some of the technical solutions may be implemented in the form of a software product. The computer software product is stored in a storage medium, and includes a plurality of instructions for instructing a computer device (which may be a personal computer, a server, or a network device) to perform all or some of the operations of the methods described in embodiments of this application. The foregoing storage medium includes any medium that can store a computer program, such as a USB flash drive, a removable hard disk, a read-only memory (ROM for short), a random access memory (RAM for short), a magnetic disk, or an optical disc.

The foregoing embodiments are merely intended for describing the technical solutions of this application, but not for limiting this application. Although this application are described in detail with reference to the foregoing embodiments, a person of ordinary skill in the art is to be understand that modifications may still be made to the technical solutions described in the foregoing embodiments, or equivalent replacements may be made to the part of the technical features; and such modifications or replacements do not cause the essence of corresponding technical solutions to depart from the spirit and scope of the technical solutions in embodiments of this application.

**Claims**

1. A video compression method, the method comprising:

   obtaining motion information of a first video frame relative to a previous video frame of the first video frame, based on first position information of a first key point in the first video frame and second position information of a second key point in the previous video frame;
   determining a latent feature based on the first video frame and an initial video frame generated based on the motion information and the previous video frame, the latent feature representing an inpainting deviation of the initial video frame relative to the first video frame; and
   performing video compression based on the first position information, the second position information, and the latent feature.

2. The method according to claim 1, wherein the determining a latent feature based on the first video frame and an initial video frame comprises:

   determining a feature vector of the initial video frame as a video frame compression context; and
   and inputting a first splicing result of a pixel matrix of the first video frame and the video frame compression context into a context encoder to obtain the latent feature.

3. The method according to claim 1 or 2, further comprising:

   performing, with a distribution parameter, arithmetic coding on the latent feature to obtain an encoded latent feature, the distribution parameter being configured for representing distribution of different information in the latent feature; and

the performing video compression based on the first position information, the second position information, and the latent feature to comprises: writing the first position information, the second position information, the encoded latent feature, and the distribution parameter into a compressed video file.

4. The method according to any one of claims 1 to 3, wherein the distribution parameter is obtained by:

performing hierarchical prior learning on the latent feature to obtain first prior information; performing spatial prior learning on the latent feature to obtain second prior information; performing temporal prior learning on the latent feature to obtain third prior information; and integrating the first prior information, the second prior information, and the third prior information to obtain the distribution parameter.

5. The method according to any one of claims 1 to 4, wherein the motion information is obtained by:

performing thin plate spline transformation based on the first position information and the second position information to obtain a thin plate spline transformation matrix; transforming the previous video frame based on the thin plate spline transformation matrix to obtain a transformed image; outputting a contribution graph over a motion network based on the transformed image, the contribution graph being configured for representing a contribution of the thin plate spline transformation matrix to motion of each pixel on the previous video frame; and calculating the motion information based on the contribution graph and the thin plate spline transformation matrix.

6. The method according to any one of claims 1 to 5, further comprising:

inputting a second splicing result of the first video frame and the previous video frame into a background motion prediction network to obtain an affine transformation matrix, the affine transformation matrix being configured for representing background motion of the first video frame relative to the previous video frame; the transforming the previous video frame based on the thin plate spline transformation matrix to obtain a transformed image comprises:

transforming the previous video frame by using the thin plate spline transformation matrix and the affine transformation matrix to obtain the transformed image; and the performing video compression based on the first position information, the second position information, and the latent feature comprises:

writing the first position information, the second position information, the latent feature, and the affine transformation matrix into a compressed video file.

7. The method according to any one of claims 1 to 6, wherein the outputting a contribution graph over a motion network based on the transformed image comprises:

outputting the contribution graph and mask information over the motion network based on the transformed image; and the initial video frame is obtained by: performing image inpainting based on the motion information, the mask information, and the previous video frame to obtain the initial video frame.

8. The method according to any one of claims 1 to 7, wherein the first key point comprises a key point of a body part comprised in a first object in the first video frame, and the second key point comprises a key point of a body part comprised in a second object in the previous video frame.

9. The method according to claim any one of claims 1 to 8, wherein the first position information and the second position information are obtained by:

recognizing the body part comprised in the first object in the first video frame, and recognizing the body part comprised in the second object in the previous video frame; determining, based on a mapping relationship between a body part and a key point, a key point corresponding to the body part comprised in the first object, determining the first position information of the key point corresponding to the body part comprised in the first object in the first video frame; and determining, based on the mapping relationship between the body part and the key point, a key point corresponding to the body part comprised in the second object, and determining the second position information of the key point corresponding to the body part comprised in the second object in the previous video frame.

10. The method according to claim any one of claims 1 to 9, wherein the first position information and the second position information are obtained by:
extracting the key point from the first video frame by using a key point detection model to obtain the first position information, and extracting the key point from the previous video frame by using the key point detection model to obtain the second position information, the key point detection model being obtained through training a training sample, the training sample comprising a plurality of sample images, a sample object in each sample image comprising a body part, and body parts comprised in sample objects in the plurality of sample images comprising various body parts.

11. A video decoding method, the method comprising:

obtaining motion information of a first video frame relative to a previous video frame of the first video frame based on first position information of a first key point in the first video frame and second position information of a second key point in the previous video frame in a compressed video file; and
obtaining a final video frame by using a latent feature in the compressed video file and an initial video frame generated based on the motion information and the previous video frame.

12. The method according to claim 11, wherein the compressed video file further comprises a distribution parameter, and the latent feature is obtained by arithmetic encoding based on the distribution parameter, and before the obtaining a final video frame, the method further comprises:
obtaining the latent feature by performing arithmetic decoding on an encoded latent feature with the distribution parameter.

13. The method according to claim 11 or 12, wherein the motion information is obtained by:

performing thin plate spline transformation based on the first position information and the second position information to obtain a thin plate spline transformation matrix;
transforming the previous video frame based on the thin plate spline transformation matrix to obtain a transformed image;
outputting a contribution graph over a motion network based on the transformed image, the contribution graph being configured for representing a contribution of the thin plate spline transformation matrix to motion of each pixel on the previous video frame; and
calculating the motion information based on the contribution graph and the thin plate spline transformation matrix.

14. The method according to claim any one of claims 11 to 13, wherein the compressed video file further comprises an affine transformation matrix, and the transforming the previous video frame based on the thin plate spline transformation matrix to obtain a transformed image comprises:
transforming the previous video frame by using the thin plate spline transformation matrix and the affine transformation matrix to obtain the transformed image.

15. The method according to claim any one of claims 11 to 14, wherein the outputting a contribution graph over a motion network based on the transformed image comprises:

outputting the contribution graph and mask information over the motion network based on the transformed image; and
the performing image inpainting based on the motion information and the previous video frame to obtain an initial video frame comprises:
performing image inpainting based on the motion information, the mask information, and the previous video frame to obtain the initial video frame.

16. A video compression apparatus, the apparatus comprising an obtaining unit, a determining unit, and a compression unit,

the obtaining unit being configured to obtain motion information of a first video frame relative to a previous video frame of the first video frame, based on first position information of a first key point in the first video frame and second position information of a second key point in the previous video frame;
the determining unit being configured to determine a latent feature based on the first video frame and an initial video frame generated based on the motion information and the previous video frame, the latent feature representing an inpainting deviation of the initial video frame relative to the first video frame; and
the compression unit being configured to perform video compression based on the first position information, the second position information, and the latent feature.

17. A video decoding apparatus, deployed on a computer device, the apparatus comprising an obtaining unit, and a decoding unit,

the obtaining unit being configured to obtain motion information of a first video frame relative to a previous video frame of the first video frame based on first position information of a first key point in the first video frame and second position information of a second key point in the previous video frame in a compressed video file; and

the decoding unit being configured to obtain a final video frame by using a latent feature in the compressed video file and an initial video frame generated based on the motion information and the previous video frame.

**18.** A computer device, comprising a processor and a memory,

the memory being configured to store program code and transmit the program code to the processor; and

the processor being configured to perform the method according to any one of claims 1 to 10 or the method according to any one of claims 11 to 15 based on instructions in the program code.

**19.** A computer-readable storage medium, configured to store program code, the program code, when executed by a processor, enabling the processor to perform the method according to any one of claims 1 to 10 or the method according to any one of claims 11 to 15.

**20.** A computer program product, comprising a computer program, the computer program, when executed by a processor, implementing the method according to any one of claims 1 to 10 or the method according to any one of claims 11 to 15.

To-be-processed video frame

Previous video frame

Key point extraction

Key point extraction

First position information

Second position information

Motion information

Image inpainting

Initial video frame

Latent feature

Video compressed file

101 Video compressed file

102

FIG. 1

A video transmitting end obtains a to-be-processed video frame and a previous video frame of the to-be-processed video frame, the previous video frame being a video frame adjacent to the to-be-processed video frame and before the to-be-processed video frame in a video frame sequence — S201

The video transmitting end extracts a key point from the to-be-processed video frame to obtain first position information of a first key point in the to-be-processed video frame, and extracts a key point from the previous video frame to obtain second position information of a second key point in the previous video frame — S202

The video transmitting end performs motion estimation based on the first position information and the second position information to obtain motion information of the to-be-processed video frame relative to the previous video frame — S203

The video transmitting end performs image inpainting based on the motion information and the previous video frame to obtain an initial video frame — S204

The video transmitting end determines a latent feature based on the to-be-processed video frame and the initial video frame, the latent feature representing an inpainting deviation of the initial video frame relative to the to-be-processed video frame — S205

The video transmitting end performs video compression based on the first position information, the second position information, and the latent feature to obtain a video compressed file — S206

FIG. 2

FIG. 3

FIG. 4

| A video receiving end obtains a video compressed file | S501 |

| The video receiving end performs motion estimation based on first position information and second position information to obtain motion information of a to-be-processed video frame relative to a previous video frame | S502 |

| The video receiving end performs image inpainting based on the motion information and the previous video frame to obtain an initial video frame | S503 |

| The video receiving end performs second inpainting on the initial video frame by using a latent feature to obtain a final video frame | S504 |

FIG. 5

To-be-processed video frame

First position information, second position information, and affine transformation matrix

Latent feature and distribution parameter

Video compressed file

Store and transmit

Determine motion information based on the first position information, the second position information, and the affine transformation matrix, to obtain an initial video frame

Perform second inpainting on the initial video frame by using the latent feature

Final video frame

FIG. 6

FIG. 7

| Solution 1 | Solution 2 | Solution 3 | To-be-processed video frame |
| | | | |
| Solution 1 | Solution 2 | Solution 3 | To-be-processed video frame |

FIG. 8

Solution 1

Solution 3

To-be-processed video frame

Solution 1

Solution 3

To-be-processed video frame

FIG. 9

Video compression apparatus 1000

1001

Obtaining unit

1002

Extraction unit

1003

Determining unit

1005

Compression unit

1004

Inpainting unit

FIG. 10

Video decoding apparatus 1100

1101

Obtaining unit

1102

Determining unit

1103

Inpainting unit

FIG. 11

1210

RF circuit

1270

Wi-Fi module

1290

1280

1260

Power supply

Processor

Audio circuit

Speaker 1261

Microphone 1262

1220

Memory

1250

Sensor

Input unit

1231

1230

Touch panel

Display unit

1240

Another input device

Display panel

1232

1241

FIG. 12

FIG. 13

## INTERNATIONAL SEARCH REPORT

| International application No. |
| --- |
| **PCT/CN2023/123893** |

| A. | CLASSIFICATION OF SUBJECT MATTER |
| --- | --- |

H04N19/20(2014.01)i

According to International Patent Classification (IPC) or to both national classification and IPC

| B. | FIELDS SEARCHED |
| --- | --- |

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT: 编码, 压缩, 目标, 对象, 标记点, 关键点, 位置, 坐标, 运动, 重建, 恢复, 帧, 失真, 补偿, encode, compress, object, landmark, keypoint, coordinate, position, location, motion, movement, reconstruct, frame, distortion, compensation

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 114363623 A (TENPAY PAYMENT TECHNOLOGY CO., LTD.) 15 April 2022 (2022-04-15)<br>entire document | 1-20 |
| A | CN 114449286 A (ALIBABA (CHINA) CO., LTD.) 06 May 2022 (2022-05-06)<br>entire document | 1-20 |
| A | CN 115052147 A (COMMUNICATION UNIVERSITY OF CHINA) 13 September 2022 (2022-09-13)<br>entire document | 1-20 |
| A | WO 2022198465 A1 (HUAWEI TECHNOLOGIES CO., LTD.) 29 September 2022 (2022-09-29)<br>entire document | 1-20 |
| A | WO 2022088631 A1 (GUANGDONG OPPO MOBILE TELECOMMUNICATIONS CORP., LTD.) 05 May 2022 (2022-05-05)<br>entire document | 1-20 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| **08 December 2023** | **04 January 2024** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/123893**

| Patent document cited in search report | | | Publication date (day/month/year) | Patent family member(s) | | | Publication date (day/month/year) |
|---|---|---|---|---|---|---|---|
| CN | 114363623 | A | 15 April 2022 | None | | | |
| CN | 114449286 | A | 06 May 2022 | None | | | |
| CN | 115052147 | A | 13 September 2022 | None | | | |
| WO | 2022198465 | A1 | 29 September 2022 | None | | | |
| WO | 2022088631 | A1 | 05 May 2022 | TW | 202218428 | A | 01 May 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211377480